# EUROPEAN PATENT APPLICATION

(11) **EP 2 747 313 A1**
(43) Date of publication of application: **25.06.2014**
(21) Application number: 13196158.3
(22) Date of filing: 09.12.2013
(51) Int. Cl.: H04B 11/00

(54) **Information terminal and communication system**

(30) Priority: 20.12.2012 JP 2012277581
(71) Applicant: Funai Electric Co., Ltd., Daito-shi, Osaka 574-0013 (JP)
(72) Inventor: Sawa, Yoshinori, Daito-shi, Osaka 574-0013 (JP); Muraoka, Masaru, Daito-shi, Osaka 574-0013 (JP)
(74) Representative: Global IP Europe Patentanwaltskanzlei

(57) **Abstract**

An information terminal includes a vibrator, a detector, and a communication controller. The vibrator is configured to generate vibration by using magnetism. The detector is configured to detect the vibration. The communication controller is configured to control a data transmission using the vibration of the vibrator, and a data reception using the detector.

## Description

### CROSS-REFERENCE TO RELATED APPLICATIONS

This application claims priority to Japanese Patent Application No. 2012-277581 filed on December 20, 2012. The entire disclosure of Japanese Patent Application No. 2012-277581 is hereby incorporated herein by reference.

### BACKGROUND

### Field of the Invention

The present invention generally relates to an information terminal and a communication system. More specifically, the present invention relates to an information terminal and a communication system for performing communication by using vibration. Background Information

Communication systems involving wireless radio waves and communication systems involving wires are known technology. Vibration communication systems that make use of piezoelectric elements are also known as an alternative to these communication systems (see Japanese Laid-Open Patent Application Publication No. 2000-183828 (Patent Literature 1), for example).

With the vibration communication system disclosed in Patent Literature 1, pressure vibrations generated by a piezoelectric element on the transmission side upon receiving the voltage output of a data modulation means is propagated through a transmission medium and a vibration transmitter to a piezoelectric element on the reception side. The voltage signal converted by the piezoelectric element on the reception side is inputted to a data demodulation means, and this data is demodulated.

The transmission medium is one that can propagate pressure vibrations. The vibration transmitter efficiently transmits to the transmission medium the frequency component used for communication of piezoelectric element vibrations. Examples of vibration transmission medium include an attachment for bringing the face on the opposite side from the mounting face of the piezoelectric element in a piezoelectric element mounting component into contact with the housing.

### SUMMARY

With the configuration disclosed in Patent Literature 1, since the output amplitude of the piezoelectric element is small, a vibration transmitter is usually essential in addition to a transmission medium. Specifically, if an attempt is made to apply the vibration communication system disclosed in Patent Literature 1 to a known information terminal (such as a smart phone or a tablet terminal), additional parts (piezoelectric element and vibration transmitter) will be necessary, which can drive up the cost. With a configuration that makes use of a piezoelectric element, an audible frequency is usually used as the vibration frequency, so a possible problem is that this vibration will be jarring to the user's ear.

One object of the present disclosure is to provide an information terminal that can be manufactured inexpensively and with which communication can be performed by vibration while avoiding the use of audible vibration. Another object of the present disclosure is to provide a communication system with which communication by vibration can be suitably carried out while avoiding the use of audible vibration.

In view of the state of the know technology, an information terminal includes a vibrator, a detector, and a communication controller. The vibrator is configured to generate vibration by using magnetism. The detector is configured to detect the vibration. The communication controller is configured to control a data transmission using the vibration of the vibrator, and a data reception using the detector.

Other objects, features, aspects and advantages of the present disclosure will become apparent to those skilled in the art from the following detailed description, which, taken in conjunction with the annexed drawings, discloses a preferred embodiment of an information terminal and a communication system.

### BRIEF DESCRIPTION OF THE DRAWINGS

Referring now to the attached drawings which form a part of this original disclosure:
FIG. 1 is a perspective view of an information terminal in accordance with one embodiment;
FIG. 2 is a block diagram of the information terminal illustrated in FIG. 1;
FIG. 3 is a block diagram of a communication system in accordance with one embodiment, with the communicating system utilizing the information terminals illustrated in FIG. 1;
FIG. 4 is a schematic diagram of the information terminals, illustrating a communication method between the information terminals in the communication system;
FIG. 5 is a schematic diagram of the information terminals, illustrating a positional relationship between a reception-side terminal and a vibration motor of a transmission-side terminal, with the transmission-side terminal and the reception-side terminal disposed in a state that allows communication;
FIG. 6 illustrates simplified diagrams illustrating data transmission and reception processing by the communication system;
FIG. 7 illustrates a circuit diagram for a vibration generator of the information terminal;
FIG. 8 illustrates simplified diagrams illustrating a specific communication example in the communication system;
FIG. 9 is a simplified diagram illustrating the start and end portions of the transmission data sent from the transmission-side terminal in the communication system;
FIG. 10 illustrates flowcharts of the manipulation and operation of the transmission-side terminal and reception-side terminal in communication using the communication system;
FIG. 11 is a schematic diagram of information terminals, illustrating a display example of a display screen of the transmission-side terminal in communication using the communication system; and
FIG. 12 is a schematic diagram of another example of a communication method used in the communication system.

### DETAILED DESCRIPTION OF EMBODIMENTS

A preferred embodiment will now be explained with reference to the drawings. It will be apparent to those skilled in the art from this disclosure that the following descriptions of the embodiment are provided for illustration only and not for the purpose of limiting the invention as defined by the appended claims and their equivalents.

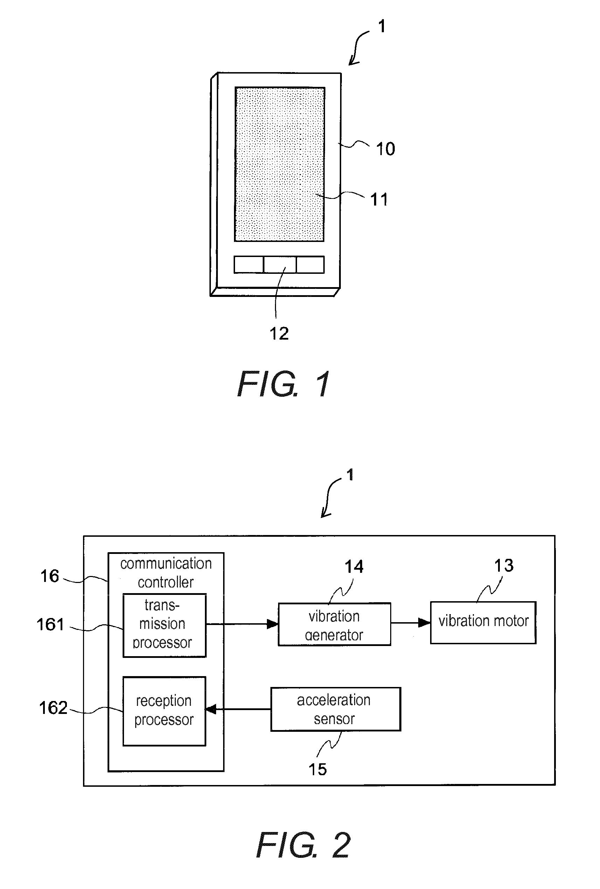

Referring initially to FIGS. 1 and 2, an information terminal 1 is illustrated in accordance with one embodiment.

FIG. 1 is a simplified perspective view of an external configuration of the information terminal 1. The information terminal 1 can be, for example, a smart phone, a tablet terminal, a PDA Personal Digital Assistant, or other such portable information terminals. As shown in FIG. 1, the information terminal 1 includes a housing 10, a display component 11, and interface buttons 12. The housing 10 is substantially cuboid in shape and is thin. The display component 11 can be a display device for simply displaying images, but preferably has the functions of both a display device and an input device (such as a touch panel). If the display component 11 is configured as a touch panel, for example, then the interface buttons 12 can be omitted in some cases.

FIG. 2 is a block diagram of a characteristic configuration of the information terminal 1. As shown in FIG. 2, the information terminal 1 includes a vibration motor 13. The vibration motor 13 is built into the housing 10 (see FIG. 1). The vibration motor 13 has a rotor having a center of gravity that is shifted away from the rotational center, and generates vibrations by driving (rotating) the rotor magnetically (electromagnetically). The detailed configuration of the vibration motor 13 is conventionally well known in the art, and therefore will not be described herein. The vibration motor 13 can also be used along with a vibration motor provided for a vibration function that notifies the user of an incoming call or e-mail, for example.

The vibration motor 13 is electrically connected to a vibration generator 14 that functions as a driver, and is switched on and off by the vibration generator 14. An example of the configuration of the vibration generator 14 will be discussed below. The vibration motor 13 and the vibration generator 14 are examples of the vibrator of the present invention.

In the illustrated embodiment, the vibrator is configured to use the vibration motor 13. However, the vibrator can instead be configured to use a moving coil, a moving magnet, a solenoid, or the like. In other words, the vibrator is not limited to the vibration motor 13, so long as it includes a mechanism for using magnetism (electromagnetism) to generate vibrations (magnetic vibration mechanism). By configuring the vibrator to have a magnetic vibration mechanism, it is possible to increase the amplitude of vibration and to use a lower frequency that will not be jarring to the ears.

The information terminal 1 further includes an acceleration sensor 15 that is configured to detect vibration. The acceleration sensor 15 is built into the housing 10. The configuration of the acceleration sensor 15 is conventionally well known in the art, and therefore will not be described herein. However, a semiconductor acceleration sensor can be used, for example. The acceleration sensor 15 can also be used along with an acceleration sensor provided for detecting the orientation of the housing, or for sensing camera shake, for example.

The acceleration sensor 15 is an example of the detector in the present invention. The detector is not limited to an acceleration sensor, so long as it is able to detect vibration. For instance, a microphone can also be used instead of the acceleration sensor 15.

The information terminal 1 further includes a communication controller 16 that controls the transmission of data obtained using the vibration motor 13 (e.g., the vibrator), and the reception of data obtained using by the acceleration sensor 15. The communication controller 16 is built into the information terminal 1. As shown in FIG. 2, the communication controller 16 includes a transmission processor 161 and a reception processor 162. The transmission processor 161 executes processing related to data to be transmitted, so that data transmission using vibration can be performed, and output the transmission data obtained by this processing to the vibration generator 14. The vibration generator 14 drives the vibration motor 13 based on this transmission data. The reception processor 162 performs data decoding processing based on the vibration detected by the acceleration sensor 15.

Although not shown in FIGS. 1 and 2, the communication controller 16 of the information terminal 1 includes a microcomputer with a control program. The communication controller 16 can also include other conventional components such as an input interface circuit, an output interface circuit, and storage devices such as a ROM (Read Only Memory) device and a RAM (Random Access Memory) device. The microcomputer of the communication controller 16 is programmed to perform the communication by using the vibration. The storage devices stores processing results and control programs such as ones for the communication that are run by the microcomputer. The internal RAM stores statuses of operational flags and various control data. The internal ROM stores the programs for various operations. The communication controller 16 is capable of selectively controlling any of the components of the information terminal 1 in accordance with the control program. It will be apparent to those skilled in the art from this disclosure that the precise structure and algorithms for the communication controller 16 can be any combination of hardware and software that will carry out the functions of the present invention.

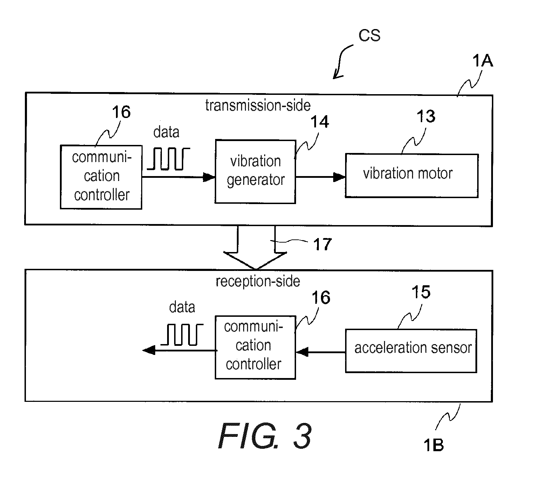

Referring now to FIG. 3, a communication system CS is illustrated in accordance with one embodiment.

In the illustrated embodiment, the information terminal 1, as shown in FIGS. 1 and 2, can be used as either a transmission-side terminal or a reception-side terminal in communication using vibration, and the information terminal 1 allows for bidirectional communication. The communication system CS that performs communication by vibration using a plurality of information terminals 1 will now be described. The information terminal 1 used as the transmission-side terminal will be labeled 1A, while the information terminal 1 used as the reception-side terminal will be labeled as 1B.

FIG. 3 is a block diagram of the communication system CS using the information terminals 1 as the transmission-side and reception-side terminals, respectively. As shown in FIG. 3, the vibration motor 13, the vibration generator 14, and the communication controller 16 of the information terminal 1 are used at the transmission-side terminal 1A. The communication controller 16 of the transmission-side terminal 1A executes control processing related to the transmission of data. In other words, the communication controller 16 of the transmission-side terminal 1A is an example of the transmission-use controller of the present invention. The acceleration sensor 15 and the communication controller 16 of the information terminal 1 are used at the reception-side terminal 1B. The communication controller 16 of the reception-side terminal 1B executes control processing related to the reception of data. In other words, the communication controller 16 of the reception-side terminal 1B is an example of the reception-use controller of the present invention.

As shown in FIG. 3, the vibrations generated by the transmission-side terminal 1A are transmitted via a vibration transmission medium 17 to the reception-side terminal 1B. With the communication system CS, this transmission of vibration is utilized to transmit and receive data for performing communication. The vibration transmission medium 17 can be any medium capable of transmitting the vibrations generated by the transmission-side terminal 1A to the reception-side terminal 1B. For example, the vibration transmission medium 17 includes the air, the housings 10 of the information terminals 1, and the like. The vibration transmission medium 17 is not limited to a single type of medium, and can be made up of a plurality of types of medium.

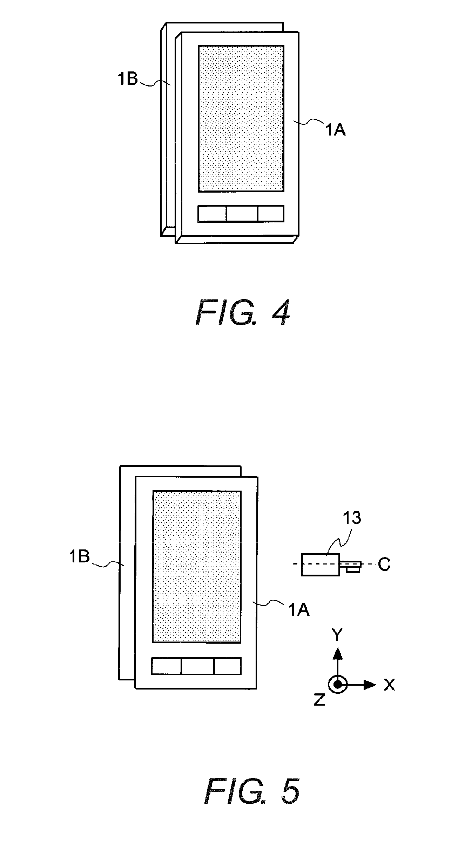

FIG. 4 shows an example of a communication method used in the communication system CS. As shown in FIG. 4, communication using vibration (i.e., short-distance communication) is accomplished by superposing the transmission-side terminal 1A and the reception-side terminal 1B. In the illustrated embodiment, the housings 10 of the transmission-side terminal 1A and the reception-side terminal 1B function as the vibration transmission medium. When the transmission-side terminal 1 and the reception-side terminal 1 are superposed, vibration of the transmission-side terminal 1A is transmitted to the reception-side terminal 1B, causing the reception-side terminal 1B to vibrate. When the reception-side terminal 1B vibrates, this vibration is detected by the acceleration sensor 15 of the reception-side terminal 1B. The detected vibration is decoded by the communication controller 16 of the reception-side terminal 1B to complete the transmission and reception of data.

In FIG. 4, the transmission-side terminal 1A is shown on top and the reception-side terminal 1B on the bottom. However, the top and bottom can be switched. Also, the orientation of the superposed terminals is not limited to what is shown in FIG. 4, and can be some other orientation.

FIG. 5 is a diagram illustrating the positional relation between the vibration motor 13 built into the transmission-side terminal 1A, and the transmission-side terminal 1A and the reception-side terminal 1B disposed in a state that allows communication. In FIG. 5, the terminals 1A and 1B are disposed so that the width direction (e.g., the short side direction) extends in the X direction, the longitudinal direction (e.g., the lengthwise direction) extends in the Y direction, and the thickness direction extends in the Z direction. The X, Y, and Z directions are mutually perpendicular to each other. Also, the two terminals 1A and 1B are superposed in the Z direction with respect to each other. The broken line C in FIG. 5 indicates the rotational center of the vibration motor 13, and the rotational center C is parallel to the X direction.

With the layout shown in FIG. 5, when the vibration motor 13 rotates, vibration is generated in the Y and Z directions. However, since the two terminals 1A and 1B are not fixed, the vibration transmitted to the reception-side terminal 1B is mainly directed in the Z direction. Accordingly, with the layout in FIG. 5, communication is performed by utilizing vibration in the Z direction.

The above layout is just one example, and the layout can be suitably changed so long as the vibration generated by the transmission-side terminal 1A is transmitted to the reception-side terminal 1B. However, for the vibration to be transmitted more efficiently, it is preferable for the system to be designed so that communication is performed in a state in which the two terminals 1A and 1B are superposed in the thickness direction (Z direction). In this case, the rotational center C of the vibration motor 13 is preferably disposed so as to be substantially perpendicular to the thickness direction (substantially perpendicular to the Z direction or substantially parallel to the X or Y direction).

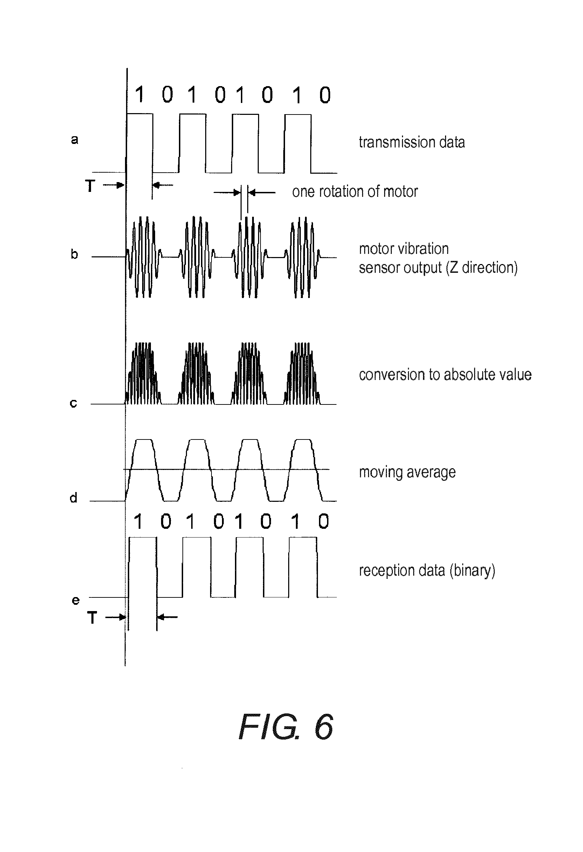

FIG. 6 illustrates simplified diagrams or timing charts a to e illustrating data transmission and reception processing by the communication system CS. In data transmission, transmission data from the communication controller 16 of the transmission-side terminal 1A (indicated by the chart a in FIG. 6) is inputted to the vibration generator 14. The transmission data is a binary signal of 1 or 0 (1/0). Consequently, the vibration generator 14 controls the drive and stopping of the vibration motor 13 according to whether the transmission data is 1 or 0.

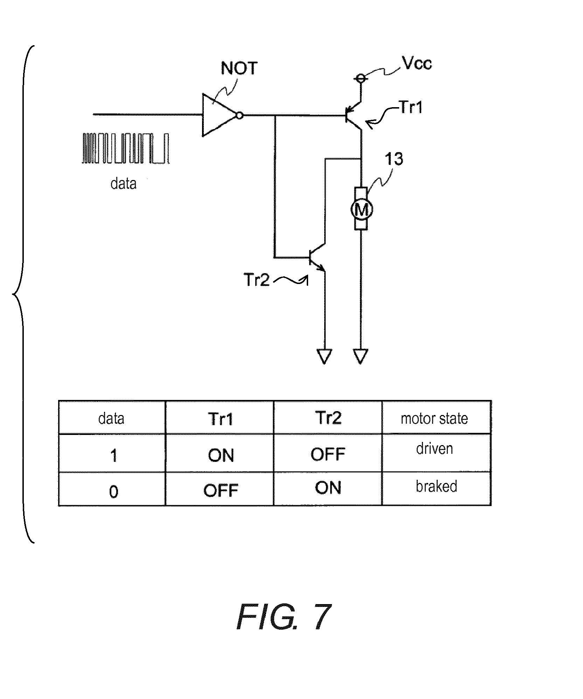

FIG. 7 shows the circuit configuration of the vibration generator 14 of the information terminal 1. As shown in FIG. 7, the vibration generator 14 includes a power supply Vcc, a logical inverter NOT, and two transistors Tr1 and Tr2. If the data inputted to the vibration generator 14 is "1," then the transistor Tr1 is switched on and the transistor Tr2 is switched off. In this case, a specific voltage is applied to the vibration motor 13, and the vibration motor 13 enters a driven state to rotate or vibrate. On the other hand, if the data inputted to the vibration generator 14 is "0," then the transistor Tr1 is switched off and the transistor Tr2 is switched on. In this case, there is a short between the terminals of the vibration motor 13, and short braking (or short brake) is applied to the vibration motor 13 to brake or stop.

In normal on/off control, it takes a while for the rotation to stop after the power has been switched off to the vibration motor 13, due to momentum. Therefore, it is difficult to switch the vibration motor 13 between rotating and stopped in the time period corresponding to the 1/0 of transmission data. With the configuration in this embodiment, when the power to the vibration motor 13 has been switched off, then the short braking is applied and the rotation (or vibration) of the vibration motor 13 is forcibly stopped. Accordingly, it is easy to switch the vibration motor 13 between a rotating state and a stopped state in the time period corresponding to the 1/0 of transmission data.

The above-mentioned short braking is an example of the braking component or the braking means of the present invention. In some cases, however, the braking means can be mechanical rather than electrical.

Referring further to FIG. 6, the description will be further provided. While the transmission data is being inputted to the vibration generator 14, the vibration motor 13 is repeatedly driven and stopped according to this transmission data, which generates vibration. The reception-side terminal 1B is also vibrated (in the Z direction) according to the vibration thus generated. When the reception-side terminal 1B vibrates (in the Z direction), the acceleration sensor 15 detects this vibration (see chart b in FIG. 6).

If the vibration is detected by the acceleration sensor 15 of the reception-side terminal 1B, then a corresponding signal is outputted to the communication controller 16 of the reception-side terminal 1B (i.e., the reception processor 162). The reception processor 162 performs processing to decode the data transmitted from the transmission-side terminal 1. More specifically, the signal indicating the vibration in the Z direction outputted from the acceleration sensor 15 is converted into an absolute value (see chart c in FIG. 6). The signal thus converted into the absolute value is subjected to moving average processing for calculating the moving average of the absolute value to smooth the signal (see chart d in FIG. 6). Then, the signal is binarized at a specific threshold (see chart e in FIG. 6). This restores the data at the reception-side terminal 1B to the same transmission data that has been outputted from the transmission-side terminal 1A.

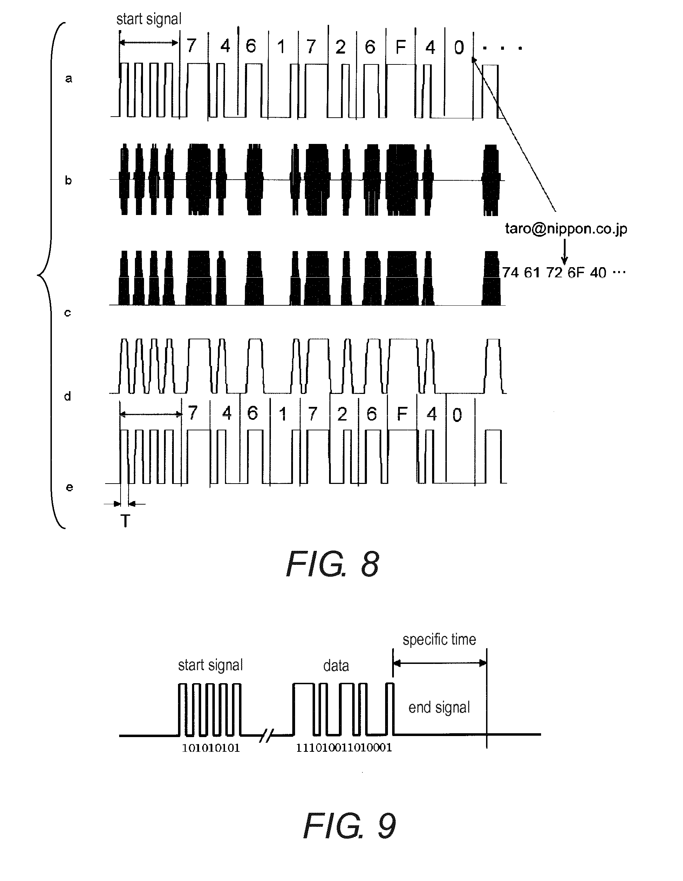

FIG. 8 shows a specific communication example in the communication system CS. The waveforms indicated by charts a to e in FIG. 8 correspond to the waveforms indicated by the charts a to e in FIG. 6, respectively.

As shown in FIG. 8, the communication system CS in the illustrated embodiment allows data such as an e-mail address or a telephone number to be sent from the transmission-side terminal 1A to the reception-side terminal 1B. The communication controller 16 (more precisely, the transmission processor 161) of the transmission-side terminal 1A produces the transmission data (as a binary signal) by converting text string data into numerical data by a predetermined method so as to make possible the data transmission by the vibration. The vibration generated by the transmission-side terminal 1A is transmitted to the reception-side terminal 1B based on the transmission data, and then the date is restored at the reception-side terminal 1B as described above through reference to FIG. 6.

FIG. 9 is a diagram illustrating the start and end portions of the transmission data sent from the transmission-side terminal 1A in the communication system CS. As shown in FIG. 9, the transmission data outputted from the transmission processor 161 includes a start signal and an end signal. The start signal is also shown in the chart a of FIG. 8.

The start signal is provided to the starting part of the transmission data so that the reception-side terminal 1B can determine the start of the data transmission. The start signal can be a signal with a specific pattern that will generate vibration from a state of no vibration. For example, the start signal includes a repeating pattern of "1" and "0", such as 1, 0, 1, 0, ..., as shown in FIGS. 8 and 9. The number of repetitions of "1" and "0" can be predetermined as needed and/or desired. With this configuration, a bit clock can be detected in a short time by restoring the start signal at the reception-side terminal 1B.

If the time period T of the bit clock (e.g., a bit clock period) used in the communication processing (e.g., the transmission and reception processing) is too short, then the communication processing will be performed using only a time period in which the vibration generated by the vibration motor 13 is in an unstable state, and it can be impossible to perform the proper communication. Thus, it is not preferable that the time period T of the bit clock is set too short. The time period T of the bit clock (e.g., the bit clock period) is preferably set to a time that is longer than the time it takes for the vibration motor 13 to reach a stable rotational speed from the start of the rotation, for example (see the charts a and b in FIG. 6, for example). In other words, the bit clock period for the data transmission is set longer than a time period for stabilizing a rotational output of the vibration motor from the start of the rotation. In the illustrated embodiment, for example, reaching the stable rotational speed means that the vibration motor 13 has reached the rated rotational speed or its maximum rotational speed.

The end signal is provided to the end portion of the transmission data so that the reception-side terminal 1B can determined the end of the data transmission. The end signal can be set so that a state of no vibration will continue for a predetermined length of time. If this length of time is set too short, then it can be impossible to distinguish from a state in which the transmission data is "0" (a state in which "0" continues). Thus, the time period is preferably long enough to avoid this.

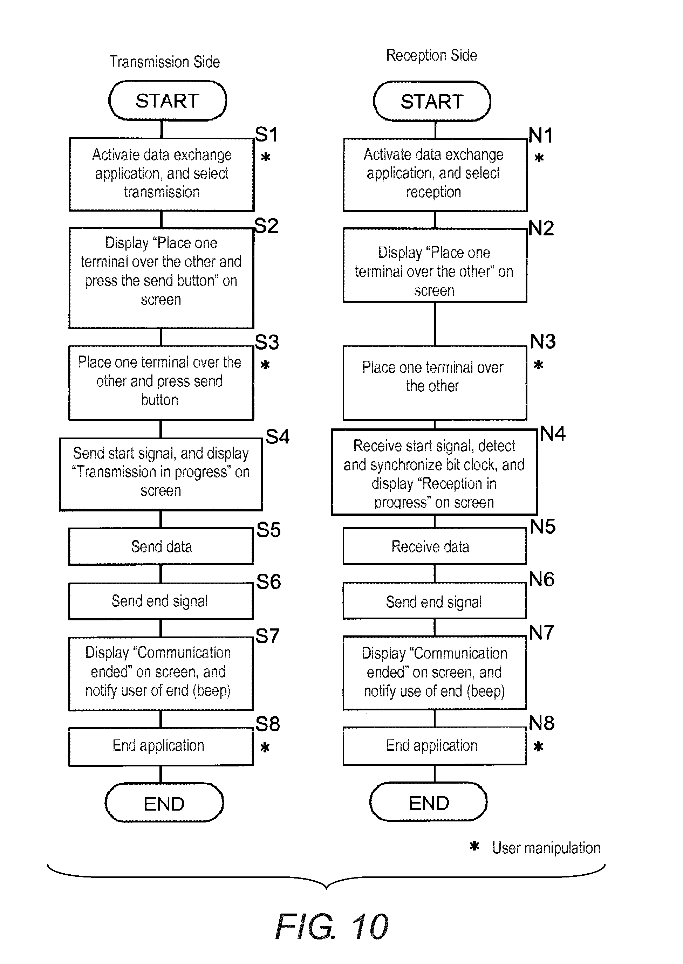

FIG. 10 illustrates flowcharts of the manipulation and operation of the transmission-side terminal 1A and the reception-side terminal 1B in communication using the communication system CS. In FIG. 10, the flowchart on the left illustrates the process at the transmission-side terminal 1A, while the flowchart on the right illustrates the process at the reception-side terminal 1B. Also, in FIG. 10, the asterisks indicate user manipulation, and everything else indicates operation of the terminals 1A and 1B.

In the transmission of data from the transmission-side terminal 1A to the reception-side terminal 1B, the user can use either the touch panel or the interface buttons 12 to activate applications for the communication (i.e., the data exchange) (steps S1 and N1). In the illustrated embodiment, "transmission" is selected at the transmission-side terminal 1A to transmit the data, while "reception" is selected at the reception-side terminal 1B to receive the data. Consequently, the processing required to transmit the data is executed at the transmission-side terminal 1A (i.e., the reception processor 162). The processing required to receive the data is executed at the reception-side terminal 1B.

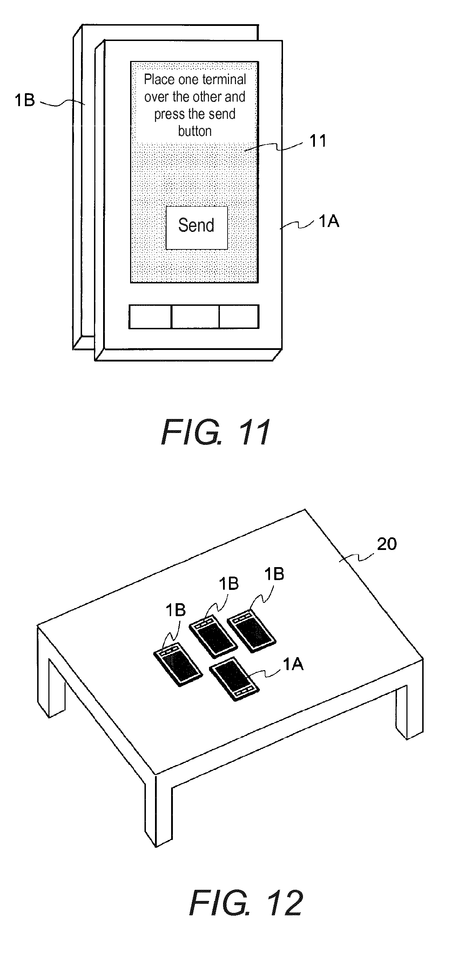

According to the user manipulation, a message related to transmission readiness is displayed on the display component 11 (e.g., the display screen) of the transmission-side terminal 1A (step S2). In the illustrated embodiment, as shown in FIG. 11, a message of "Place one terminal over the other and press the send button" and a send button are displayed on the display screen of the display component 11. Meanwhile, a message related to reception readiness is displayed on the display component 11 of the reception-side terminal 1B (step N2). In the illustrated embodiment, a message of "Place one terminal over the other" is displayed.

The user superposes the transmission-side terminal 1A and the reception-side terminal 1B according to the screen display (steps S3 and N3). When the two have been superposed, the user presses the send button on the transmission-side terminal 1A.

When the send button is pressed, a start signal is sent from the transmission-side terminal 1A, and a message to the effect that transmission is in progress is displayed on the display screen of the transmission-side terminal 1A (step S4). Once the transmission of the start signal begins, the transmission-side terminal 1A generates the vibration according to this signal. This vibration is transmitted through the housings 10 of the transmission-side and reception-side terminals 1A and 1B to the reception-side terminal 1B. The reception-side terminal 1B then restores (receives) the start signal based on the signal from the acceleration sensor 15 that detects the vibration (step N4). In particular, the reception-side terminal 1B detects the bit clock based on the start signal, and begins synchronization based on the bit clock. If the bit clock is detected and the synchronization is completed, then, a message to the effect that reception is in progress is displayed on the display screen of the reception-side terminal 1B.

The transmission-side terminal 1A sends the intended data (such as an e-mail address or a telephone number) subsequent to the start signal (step S5). Specifically, the transmission-side terminal 1A generates the vibration corresponding to the intended data. The reception-side terminal 1B detects the vibration generated by the transmission-side terminal 1A, and receives the intended data (step N5).

The transmission-side terminal 1A sends the end signal subsequent to the transmission of the intended data (step S6). During the transmission of the end signal, the transmission-side terminal 1A does not generate any vibration. Therefore, the reception-side terminal 1B does not detect any vibration for the specific length of time in which the end signal is being sent (i.e., receiving the end signal; step N6). If a state in which no vibration is detected continues for this specific length of time, then the reception-side terminal 1B determines that the transmission of the data from the transmission-side terminal 1A has completed.

Once the transmission of the end signal ends, then the transmission-side terminal 1A displays a message on the display screen to the effect that communication has ended (step S7). Here, an alert sound (such as a beep) can be emitted. Also, if the reception-side terminal 1B determines that the transmission of the data from the transmission-side terminal 1A has ended, then it displays a message on the display screen to the effect that communication has ended (step N7). An alert sound can also be emitted here.

When the user is notified of the end of communication, the applications for communication are ended at both of the terminals 1A and 1B (steps S8 and N8). This ends communication by the vibration.

With the communication system CS in the illustrated embodiment, the communication is performed by using the transmission of the vibration generated by the vibration motor 13. Accordingly, vibration with a large amplitude is easy to obtain, and the proper transmission and reception of the data can be easily accomplished. Also, since vibration of a low frequency is used, it is easy to avoid having the vibration be jarring to the user's ears. Further, there is no need to further provide a vibration transmission component in addition to a transmission medium (corresponds to the vibration transmission medium in the illustrated embodiment), as is the case when a piezoelectric element with a small output amplitude is used. This is advantageous from a cost perspective.

Also, the vibration motor 13 can be used along with a vibration motor provided for a vibration function, for example. Furthermore, the acceleration sensor 15 that detects the vibration can be used along with an acceleration sensor for detecting the orientation of the screen, for example. Accordingly, the information terminals 1 of the communication system CS can be existing portable information terminals, such as smart phones or tablet terminals, which means that fewer additional parts are needed, which lowers the cost.

The foregoing descriptions of the embodiment according to the present invention are provided for illustration only. The present invention is not limited to or by the configuration of the embodiment given above. Various changes and modifications can be made herein without departing from the scope of the invention as defined in the appended claims.

For example, with the communication method of the communication system CS, the data is sent from the single transmission-side terminal 1A to the single reception-side terminal 1B. However, the communication system CS is not limited to this configuration. For example, the data can be sent simultaneously from a single transmission-side terminal 1A to a plurality of reception-side terminals 1B.

FIG. 12 illustrates a modified example of the communication method used in the communication system CS. As shown in FIG. 12, the communication by vibration (e.g., the short-distance communication) can be accomplished by placing the single transmission-side terminal 1A and the plurality of (three in FIG. 12) reception-side terminals 1B on a placement table 20. In this case, the vibration generated by the transmission-side terminal 1A is simultaneously transmitted through the housing 10 of the transmission-side terminal 1A, the placement table 20, and the housings 10 of the reception-side terminals 1B to the reception-side terminals 1B. Specifically, with this configuration, the housings 10 and the placement table 20 function as the vibration transmission medium. The configuration shown in FIG. 12 is advantageous because the data can be sent from the single transmission-side terminal 1A to the plurality of reception-side terminals 1B, simultaneously.

In accordance with a first aspect, an information terminal is configured to perform communication by using vibration. The information terminal includes a vibrator that generates vibrations by using magnetism, a detector that detects vibrations, and a communication controller that controls the transmission of data obtained using vibrations of the vibrator, and the reception of data obtained using the detector.

With this configuration, since the vibrator generates its vibration by using magnetism, communication can be performed using vibration with a large amplitude. Accordingly, with the information terminal of this configuration, it is easy to carry out the proper transmission and reception of data. Also, with the information terminal of this configuration, since vibration of a low frequency can be used, it is less likely that the vibration will be jarring to the user's ears. Furthermore, with the information terminal of this configuration, there is no need to provide a vibration transmitter in addition to a transmission medium, as is the case when a piezoelectric element is used, so this is advantageous from a cost standpoint.

In accordance with a second aspect, the information terminal according to the first aspect further includes braking means for forcibly stopping the vibration of the vibrator. With this configuration, the duration of the state in which the vibration continues for a time after a vibration halt command is issued to the vibrator can be shortened, and the vibration can be easily controlled according to the transmitted data. This configuration with the braking means is particularly advantageous when the vibrator makes use of a motor.

In accordance with a third aspect, the information terminal according to the first aspect is configured such that the braking means includes short braking. With this configuration, since the braking means can be formed by an electrical circuit, the structure of the information terminal is not complicated and the size does not become large.

In accordance with a fourth aspect, the information terminal according to any of the first to third aspects is configured such that the vibrator includes a vibration motor, a moving coil, a moving magnet, or a solenoid. With this configuration, it is possible to share parts used for the vibration function that are provided in order to notify the user of an incoming call or e-mail, for example, which is advantageous from a cost standpoint

In accordance with a fifth aspect, the information terminal according to any of the first to fourth aspects is configured such that the period of the bit clock used for communication processing is longer than the time it takes for the vibration motor to reach a stable output state from the start of rotation if the vibrator is configured as the vibration motor. An example of a stable output state is a state in which the vibration motor has reached the rated rotational speed or its maximum rotational speed. This configuration avoids a situation in which the communication processing is performed using only a period in which the vibration generated by the vibration motor is unstable, so the proper communication can be carried out more easily.

In accordance with a sixth aspect, the information terminal according to any of the first to fifth aspects is configured such that the detector is an acceleration sensor or a microphone. With this configuration, parts already included by an existing information terminal can be used to realize the information terminal with a communication function that makes use of the vibration, which is advantageous from a cost standpoint.

In accordance with a seventh aspect, a communication system is configured to perform communication by transmitting vibration generated by a transmission-side terminal to a reception-side terminal via a vibration transmission medium. The transmission-side terminal includes a vibrator for generating vibrations by using magnetism, and a transmission-use controller for controlling the transmission of data obtained using vibrations from the vibrator. The reception-side terminal includes a detector for detecting vibrations, and a reception-use controller for controlling the reception of data obtained using the detector.

With this configuration, since the vibrator uses magnetism to generate vibrations, communication can be performed using the vibrations of higher amplitude. Accordingly, with the communication system of this configuration, the proper transmission and reception of data can be easily accomplished. Also, with the communication system of this configuration, since the vibration of low frequency can be used, it is less likely that the vibration will be jarring to the user's ears.

In accordance with an eighth aspect, the communication system according to the seventh aspect is configured such that the vibration transmission medium includes housings of the transmission-side terminal and the reception-side terminal. With this configuration, communication using vibration can be performed by superposing the transmission-side terminal and the reception-side terminal, for example.

In accordance with a ninth aspect, the communication system according to the seventh or eighth aspect is configured such that the vibration transmission medium includes a placement table on which the transmission-side terminal and the reception-side terminal are placed. With this configuration, data can be sent simultaneously from a single transmission-side terminal to a plurality of reception terminals.

With the information terminal, an information terminal is provided that can be manufactured inexpensively and with which communication can be performed by vibration while avoiding the use of audible vibration. With the communication system, a communication system is provided with which communication by vibration can be properly carried out while avoiding the use of audible vibration.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts.

While only a preferred embodiment has been chosen to illustrate the present invention, it will be apparent to those skilled in the art from this disclosure that various changes and modifications can be made herein without departing from the scope of the invention as defined in the appended claims. Furthermore, the foregoing descriptions of the embodiment according to the present invention are provided for illustration only, and not for the purpose of limiting the invention as defined by the appended claims and their equivalents.

## Claims

1. An information terminal comprising:
a vibrator configured to generate vibration by using magnetism;
a detector configured to detect vibration; and
a communication controller configured to control a data transmission using the vibration of the vibrator, and a data reception using the detector.

2. The information terminal according to claim 1, further comprising a braking component configured to forcibly stop the vibration of the vibrator.

3. The information terminal according to claim 2, wherein
the braking component includes a short brake.

4. The information terminal according to any of claims 1 to 3, wherein
the vibrator includes a vibration motor, and
the communication controller is configured such that a bit clock period for the data transmission is set longer than a time period for stabilizing a rotational output of the vibration motor.

5. The information terminal according to any of claims 1 to 4, wherein
the detector includes one of an acceleration sensor and a microphone.

6. A communication system comprising:
a transmission-side terminal including a vibrator that is configured to generate vibration by using magnetism, and a transmission-use controller that is configured to control a data transmission using the vibration of the vibrator; and
a reception-side terminal configured to receive the vibration generated by the vibrator of the transmission-side terminal via a vibration transmission medium, the reception-side terminal including a detector that is configured to detect the vibration generated by the vibrator of the transmission-side terminal, and a reception-use controller configured to control a data reception using the detector.

7. The communication system according to claim 6, wherein
the vibration transmission medium includes housings of the transmission-side terminal and the reception-side terminal.

8. The communication system according to claim 6 or 7, wherein
the vibration transmission medium includes a placement table on which the transmission-side terminal and the reception-side terminal are placed.
